# EUROPEAN PATENT SPECIFICATION

(11) **EP 0 675 128 B1**
(45) Date of publication and mention of the grant of the patent: **05.12.2001**
(21) Application number: 94302373.9
(22) Date of filing: 31.03.1994
(51) Int. Cl.: C07F 7/08

(54) **Method for preparation of stable water-borne silane compositions**
Verfahren zur Herstellung stabiler wässriger Silan-Zusammensetzungen
Procédé de préparation de compositions de silane aqueux stables

(43) Date of publication of application: 04.10.1995
(60) Divisional application: 01201939.4
(73) Proprietor: Sivento Inc., Parsippany New Jersey 07054 (US)
(72) Inventor: Steinmetz, James R., New Jersey (US); Arkles, Barry C., Pennsylvania (US)
(74) Representative: W.P. THOMPSON & CO.

(56) References cited:
- EP-A- 0 049 365
- FR-A- 1 100 235
- GB-A- 2 108 984
- US-A- 5 051 129

## Description

### FIELD OF THE INVENTION

This invention relates generally to a method for preparing silanes, and more particularly to a method for preparing stable, water-borne silanes.

### BACKGROUND OF THE INVENTION

Organosilanes have been commercially important as coupling agents in composite systems for over three decades. Due to its ability to react with both organic and inorganic substrates, organosilane can facilitate bonding of disparate substances such as organic resins and polymers with inorganic substrates.

The reaction of silane coupling agents involves five steps. First, hydrolysis of alkoxysilanes generates reactive silanol groups which are the bonding sites for attachment to inorganic substrates. The water for hydrolysis of alkoxy groups can be present on the substrate's surface, can be absorbed from the atmosphere, or it can be contained in the medium. Next, a condensation reaction forms oligomers. In the third step, the oligomers hydrogen bond with available hydroxyl groups of the inorganic surface. In the fourth step, water is split off and stable siloxane linkages form. Finally, the reactive organofunctional group will form covalent and hydrogen bonds with the organic resin or polymer during cure.

In silane surface treatment it has been the practice to hydrolyze the alkoxy groups of alkoxysilanes to form silanol containing species, which, as noted above, are highly reactive and specifically responsible for hydrogen bonding with the substrate. Hydrolysis to silanol generates alcohol as a by-product, typically methanol or ethanol, which are toxic and extremely flammable. Thus, in terms of enhanced reactivity, environmental and safety advantages, it would be ideal to supply silanes in silanol form without the presence of such by-products. Silanols, however, tend to self-condense to form siloxanes resulting in phase separation or gelation.

Due to poor solution stability in water, i.e., reaction to form silanol and then siloxanes, alkoxy silanes have typically been provided in various organic solvents. However, with increasingly strict VOC requirements, use of such organic solvents has become undesirable. It would, therefore, be desirable to provide silanes in aqueous solutions.

Aqueous compositions of alkyltrialkoxysilanes have been disclosed in the prior art. In US-A-5 073 195, an aqueous composition of a water soluble silane-coupling agent and an alkyltrialkoxysilane is disclosed. The composition of Cuthbert is said to overcome a deficiency of prior water repellent compositions associated with an inability of such repellents to leave a layer upon the porous substrate to be treated, resulting in coatings of low durability. In addition, the benefits of providing the silanes in an aqueous solution are noted. To form the composition of Cuthbert, alkyltrialkoxysilane, water soluble coupling agent and a limited amount of water are mixed and stripped to 60°C under an aspirator. Cuthbert discloses that the molar ratio of alkyltrialkoxysilane to the water soluble coupling agent should be between 0.5:1 to about 3.0:1, preferably 1.5:1 to about 2.0:1. According to the examples, the molar ratio of water to alkyltrialkoxysilane is about 1.1 - 1.3:1. Since a minimum of molar ratio of water to alkyl trialkxoysilane of 1.5:1 is required to completely hydrolyze the alkyltrialkoxysilane, less than all alkoxy groups of the alkyltrialkoxysilane compositions of Cuthbert will undergo hydrolysis. Thus, once the residue of the reaction described above is added to water to prepare aqueous silane solutions, further hydrolysis will take place generating additional unwanted alcohol by-product and, ultimately, siloxane. The shelf-life of the aqueous silane solutions of Cuthbert is therefore expected to be short. Further, the alcohol by-product renders such solutions extremely flammable.

FR-A-1100235 describes a process for preparation of organosilicon compounds which are soluble in water. In the process, an alkylalkoxysilane is heated in water at a temperature of 75 to 105°C and a pH of 5 to 8 until a homogeneous solution is obtained.

Thus, there is a need for aqueous solutions of alkoxy silanes of greater stability and lower flammability than those heretofore available.

### SUMMARY OF THE INVENTION

A method for forming water-borne silane compositions stable in aqueous solution, the method comprising:
(a) combining a water soluble silane, a water insoluble silane which contains alkoxy groups and water, the water soluble silane and the water insoluble silane being present in a molar ratio of at least 2.5 : 1 and the molar ratio of water to water insoluble silane being at least 1.5 : 1;
(b) allowing the water to effect the complete hydrolysis of the alkoxy groups of the water insoluble silane; and
(c) removing from the mixture alcohol compounds produced during the hydrolysis reaction of step (b) ;
whereby the water soluble silane and the water are present in sufficient quantities to ensure completion of the hydrolysis reaction and all of the alkoxy groups of the water insoluble silane are thereby hydrolysed.

A method for enhanced stabilization of aqueous solutions of alkoxysilanes has thus now been found. The method, broadly stated, comprises reacting water insoluble alkoxysilanes with water soluble silane stabilizing agents, removing, preferably by distillation, the alcohol which is generated and, optionally, adding water to form the aqueous solution. The method of the invention, which ensures that alkoxysilane is completely reacted, results in aqueous solutions of silanes which are otherwise insoluble, which are stable for six months or more and have extremely high flash points.

### DETAILED DESCRIPTION OF THE INVENTION

In the invention, water soluble silanes are used as solution stabilizing agents for water insoluble silanes. The water soluble silanes are preferably amino- or phosphatofunctional silicon compounds.

The water-insoluble alkoxysilanes are preferably trialkoxysilanes.

In the invention, water soluble silane, water insoluble silane and deionized water are mixed and agitated. Water soluble silane and water insoluble silane are present in a molar ratio of at least about 2.5 to 1. At lower ratios of soluble to insoluble silane, gelation can occur.

The minimum theoretical molar ratio of water to water insoluble silane is 1.5:1.0 to completely hydrolyze the water insoluble silane. Complete hydrolysis of the water insoluble silane is essential to the present method. In the absence of complete hydrolysis during the preparation of such water-borne silane compositions, further hydrolysis will occur during storage resulting in alcohol formation.

While 1.5:1.0 is the minimum theoretical water to water insoluble silane molar ratio, higher ratios are preferable. One reason for this preference is that the reaction product tends to be viscous, the additional water facilitating handling. Reaction mixtures ranging from 10 to 60 percent aqueous solutions, based on total silanes in total silanes plus water, are recommended. Thus, the water soluble silane, water insoluble silane and water are preferably present, respectively, in the reaction mixture in a molar ratio ranging from about 1.0:0.3:11 to about 1.0:0.4:148.

An antifoam agent may optionally be added to the reaction mixture. Alcohol produced during the hydrolysis is substantially completely removed with suitable equipment, such as a fractionating column. Additional water may be added to the reaction product as alcohol is distilled off.

Suitable water soluble silanes include, without limitation, aminofunctional silanes such as N-(aminoethylaminomethyl)phenyltrimethoxysilane, N-(2-aminoethyl)-3-aminopropyltris(2-ethylhexoxy)-silane, 3-aminopropyltrimethoxysilane, and phosphato silanes such as diethylphosphatoethyltriethoxysilane. The preferred water soluble silanes include trimethoxysilyl-propyldiethylenetriamine and N-(2-aminoethyl)-3-aminopropyltrimethoxysilane, and most preferred is aminopropyltriethoxysilane.

The aforementioned water soluble silanes may be used to stabilize and solubilize a broad range of water insoluble silanes, including, without limitation, those with amine, epoxy, mercapto, methacrylate, vinyl, alkyl organo-functional groups and mixtures thereof. Examples of such silanes include, without limitation, 3-chloropropyltrimethoxysilane, 3-mercaptopropyltrimethoxysilane, methyltrimethoxysilane, vinyltriethoxysilane. Preferred water insoluble silanes for use in the present invention include methyltriethoxysilane, vinyltrimethoxysilane, gamma-glycidoxypropyltrimethoxysilane and 3-methacryloxypropyltrimethoxysilane.

The reactions occuring in the present invention can be carried out at room temperature and atmospheric pressure. The reaction is mildly exothermic, however cooling is not required.

The following examples illustrate the method of the present invention. The examples are intended merely for purpose of illustration and are not to be regarded as limiting the scope of the invention or the manner in which it may be practiced.

### EXAMPLE I

A one liter, three neck flask was equipped with an overhead stirrer, condenser and thermometer. One mole (221.4 g.) of aminopropyltriethoxysilane, 0.41 moles (73.8 g.) of methyltriethoxysilane and 24.6 moles (442.8 g.) of deionized water were added to the flask. A temperature rise of about 30°C was observed. The mixture was agitated for one hour. 0.07 g of SAG 5693 (antifoam additive) was added to the mixture. SAG is a silicon surfactant commercially available from OSi Specialties of Danbury, Connecticut. The reaction apparatus was equipped with a fractionating column, still head and condenser. The reaction mixture was heated to remove an ethanol/water mixture by distillation. Distillation continued until the vapor temperature was constant at 100°C and ethanol concentration in the flask was less than 1 percent. As distillate was removed, its volume was replaced, in the reaction flask, by adding water. The contents of the reaction flask were then cooled. The reaction yielded 725.0 g. of product (I) having the general structure shown below:

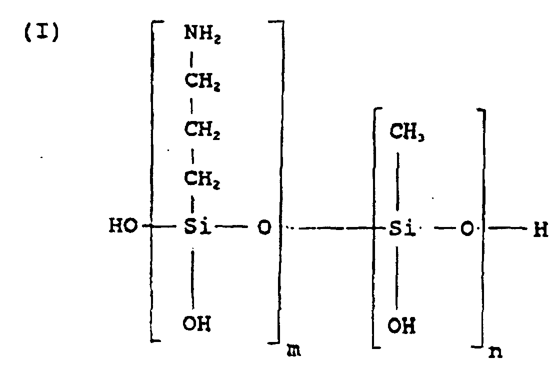

### EXAMPLE 2

The same apparatus is utilized as in Example 1. One mole of aminopropyltriethoxysilane, 0.41 moles (60.7 g.) of vinyltrimethoxysilane and 24.6 moles of deionized water were charged to the flask. A temperature rise of about 30°C was observed. The mixture was agitated for one hour. 0.07 g of SAG 5693 was added to the mixture. The reaction mixture was heated to remove an methanol/ethanol/water mixture by distillation. Distillation continued until the vapor temperature was constant at 100°C and ethanol concentration in the flask was less than 1 percent. As distillate was removed, its volume was replaced, in the reaction flask, by adding water. The contents of the reaction flask were then cooled. The reaction yielded 710.0 g. of product (II) having the general structure shown below:

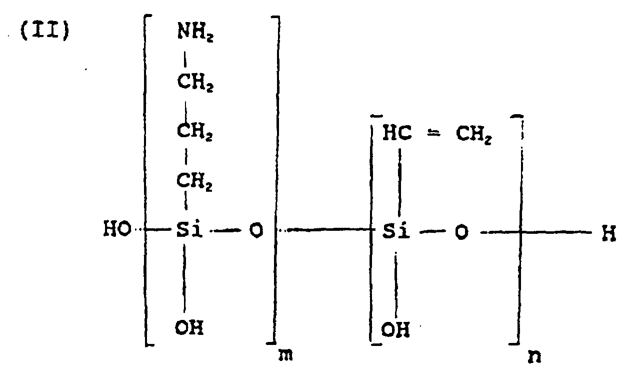

### EXAMPLE 3

224 g. water, and 12 g. of NaOH to facilitate solubilization, were charged into a one liter flask and agitated until the NaOH was completely dissolved. 98.4 g. of diethylphosphatoethyltriethoxysilane was added to the flask and agitated until the solution was clear (completely hydrolyzed). 23 g. of methacryloxypropyltrimethoxysilane was added to the phosphato/water solution and agitated until the solution was clear. (The diethylphosphatoethyltriethoxysilane to methacryloxypropyltrimethoxysilane molar ratio was 1.0:0.3.) A rotary evaporator was used to strip EtOH/MeOH from the solution at low heat (50°C maximum). As alcohol was drawn off, 357.4 g of water was added to the flask to replenish to the original volume.

The stable water-borne silane compositions produced according to the present invention are useful, for example, as a component for providing adhesive strength in acrylic latex and other sealants. Silane is typically present as a component in such a sealant formulation at about 0.55 weight percent. Acrylic latex sealants formulated with stable water-borne silanes produced according to the present method will have a shelf life far in excess of that of sealants formulated with conventional silanes.

## Claims

1. A method for forming water-borne silane compositions stable in aqueous solution, the method comprising:
(a) combining a water soluble silane, a water insoluble silane which contains alkoxy groups and water, the water soluble silane and the water insoluble silane being present in a molar ratio of at least 2.5 : 1 and the molar ratio of water to water insoluble silane being at least 1.5 : 1;
(b) allowing the water to effect the complete hydrolysis of the alkoxy groups of the water insoluble silane; and
(c) removing from the mixture alcohol compounds produced during the hydrolysis reaction of step (b);
whereby the water soluble silane and the water are present in sufficient quantities to ensure completion of the hydrolysis reaction and all of the alkoxy groups of the water insoluble silane are thereby hydrolysed.

2. A method according to claim 1, further comprising adding water to form an aqueous solution during the time when or after the alcohol compounds are removed.

3. A method according to claim 1 or 2, wherein the water soluble silane is selected from aminofunctional silane and phosphatofunctional silane.

4. A method according to claim 1 or 2, wherein the water soluble silane is selected from aminopropyltriethoxysilane, trimethoxysilylpropyldiethylenetriamine and N- (2-aminoethyl)-3-aminopropyltrimethoxysilane.

5. A method according to claim 4, wherein the water soluble silane is aminopropyltriethoxysilane and the water insoluble silane is selected from methyltriethoxysilane, vinyltrimethoxysilane, gamma-glycidoxypropyltrimethoxysilane and 3-methacryloxypropyltrimethoxysilane.

6. A method according to any of claims 1 to 5, wherein the molar ratio of the water soluble silane, the water insoluble silane and water is about 1.0:0.3:11 to about 1.0:0.4:148.

7. A method according to any of claims 1 to 6, wherein the water insoluble silane has an organo group selected from amine, epoxy, mercapto, methacrylate, vinyl, alkyl and combinations thereof.

8. A method according to claim 7, wherein the water insoluble silane is selected from methyltriethoxysilane, vinyltrimethoxysilane, gamma-glycidoxypropyltrimethoxysilane and 3-methacryloxypropyltrimethoxysilane.

9. A method according to any of claims 1 to 8, wherein an antifoam additive is added.

## Patentansprüche

1. Verfahren zur Erzeugung von Silanzusammensetzungen auf Wasserbasis, die in wäßriger Lösung stabil sind, wobei das Verfahren folgendes umfaßt:
(a) Vereinigen eines wasserlöslichen Silans eines wasserunlöslichen Silans, das Alkoxyreste enthält, und Wasser, wobei das wasserlösliche Silan und das wasserunlösliche Silan in einem Molverhältnis von mindestens 2,5:1 vorliegen und das Molverhältnis von Wasser zu wasserunlöslichem Silan mindestens 1,5:1 beträgt;
(b) Ablaufenlassen der durch Wasser bewirkten vollständigen Hydrolyse der Alkoxyreste des wasserunlöslichen Silans; und
(c) Entfernen von während der Hydrolyser Aktion von Schritt (b) entstandenen Alkoholverbindungen aus dem Gemisch;
wodurch das wasserlösliche Silan und das Wasser in ausreichenden Mengen vorliegen, um die Vollständigkeit der Hydrolysereaktion zu gewährleisten, wodurch alle Alkoxyreste des wasserunlöslichen Silans hydrolysiert werden.

2. Verfahren nach Anspruch 1, welches weiter die Zugabe von Wasser umfaßt, um während oder nach dem Entfernen der Alkohol verbindungen eine wäßrige Lösung zu bilden.

3. Verfahren nach Anspruch 1 oder 2, wobei das wasserlösliche Silan aus Silan mit Aminfunktionalität und Silan mit Phosphatfunktionalität ausgewählt ist.

4. Verfahren nach Anspruch 1 oder 2, wobei das wasserlösliche Silan aus Aminopropyltriethoxysilan, Trimethoxysilylpropyldiethylentriamin und N-(2-Aminoethyl)-3-aminopropyltrimethoxysilan ausgewählt ist.

5. Verfahren nach Anspruch 4, wobei das wasserlösliche Silan Aminopropyltriethoxysilan ist und das wasserunlösliche Silan aus Methyltriethoxysilan, Vinyltrimethoxysilan, γ-Glycidoxypropyltrimethoxysilan und 3-Methacryloxypropyltrimethoxysilan ausgewählt ist.

6. Verfahren nach einem der Ansprüche 1 bis 5, wobei das Molverhältnis des wasserlöslichen Silans, des wasserunlöslichen Silans und Wasser etwa 1,0:0,3:11 bis etwa 1,0:0,4:148 beträgt.

7. Verfahren nach einem der Ansprüche 1 bis 6, wobei das wasserunlösliche Silan einen organischen Rest aufweist, der aus Amin, Epoxy-, Mercapto-, Methacrylat-, Vinylgruppen, Alkylresten und Kombinationen davon ausgewählt ist.

8. Verfahren nach Anspruch 7, wobei das wasserunlösliche Silan aus Methyltriethoxysilan, Vinyltrimethoxysilan, γ-Glycidoxypropyltrimethoxysilan und 3-Methacryloxypropyltrimethoxysilan ausgewählt ist.

9. Verfahren nach einem der Ansprüche 1 bis 8, wobei ein Schaumverhütungszusatz zugegeben wird.

## Revendications

1. Une méthode de formation de compositions de silanes aqua-portées stables en solution aqueuse, cette méthode consistant :
a) à combiner un silane soluble dans leau, un silane insoluble dans l'eau contenant des groupes alkoxy et d l'eau, le silane soluble dans l'eau et le silane insoluble dans l'eau étant présent dans un rapport molaire d'au moins 2,5 : 1 et la proportion molaire de l'eau par rapport au silane insoluble dans l'eau étant d'au moins 1,5 : 1 ;
b) à permettre à l'eau d'effectuer l'hydrolyse complète des groupes alkoxy du silane insoluble dans l'eau ; et
c) à éliminer du mélange les composés du type alcool produits au cours de la réaction d'hydrolyse de l'étape (b), le silane soluble dans l'eau et l'eau étant présents en quantités suffisantes pour assurer l'achèvement de la réaction d'hydrolyse, de sorte que la totalité des groupes alkoxy du silane insoluble dans l'eau soient ainsi hydrolysés.

2. Une méthode selon la revendication 1, consistant au surplus à ajouter de l'eau pour former une solution aqueuse pendant le temps, ou après que les composés du type alcool sont éliminés.

3. Une méthode selon la revendication 1 ou 2, dans laquelle le silane soluble dans l'eau est choisi entre les silanes aminofonctionnels et les silanes phosphatofonctionnels.

4. Une méthode selon la revendication 1 ou 2, dans laquelle le silane soluble dans l'eau est choisi entre l'aminopropyltriéthoxysilane, la triméthoxysilylpropyldiéthylènetriamine et le 3-aminopropyltriméthoxysilane.

5. Une méthode selon la revendication 4, dans laquelle le silane soluble dans l'eau est l'aminopropyltriéthoxysilane et le silane insoluble dans l'eau est choisi entre le méthyltriéthoxysilane, le vinyltriméthoxysilane, le gamma-glycidoxypropyltriméthoxysilane et le 3-méthacryloxypropyltriméthoxysilane.

6. Une méthode selon l'une quelconque des revendications 1 à 5, dans laquelle la proportion molaire du silane soluble dans l'eau, du silane insoluble dans l'eau et de l'eau est comprise entre environ 1,0 : 0,3 : 11 et environ 1,0:0,4:145.

7. Une méthode selon l'une quelconque des revendications 1 à 6, dans laquelle le silane insoluble dans l'eau porte un groupe organique choisi entre les groupes amino, époxy, mercapto, méthacrylate, vinyle, alkyle et leurs combinaisons.

8. Une méthode selon la revendication 7, dans laquelle le silane insoluble dans l'eau est choisi entre le méthyltriéthoxys lane, le vinyltriméthoxysilane, le gamma-glycidoxypropyltriméthoxysilane et le 3-méthacryloxypropyltriméthoxysilane.

9. Une méthode selon l'une quelconque des revendications 1 à 8, dans laquelle est ajouté un additif anti-moussant.
